# EUROPÄISCHE PATENTSCHRIFT

(11) **EP 0 550 833 B1**
(45) Veröffentlichungstag und Bekanntmachung des Hinweises auf die Patenterteilung: **01.07.1998**
(21) Anmeldenummer: 92120851.8
(22) Anmeldetag: 07.12.1992
(51) Int. Cl.: A22C 13/00

(54) **Einschichtige, transparente, biaxial orientierte, thermofixierte schlauchförmige Nahrungsmittelhülle**
Single-layer, transparent, biaxially oriented, heat-set, tubular food casings
Enveloppes tubulaires, transparentes, biaxialement orientées, thermostabilisées en une couche pour produits alimentaires

(30) Priorität: 14.12.1991 DE 4141292
(43) Veröffentlichungstag der Anmeldung: 14.07.1993
(73) Patentinhaber: HOECHST AKTIENGESELLSCHAFT, 65926 Frankfurt am Main (DE)
(72) Erfinder: Stenger, Karl, 65385 Rüdesheim (DE); Beissel, Dieter, 65203 Wiesbaden (DE)
(74) Vertreter: Zounek, Nikolai, Dipl.-Ing.

(56) Entgegenhaltungen:
- EP-A- 217 069
- EP-A- 325 151
- EP-A- 450 435
- DE-A- 3 943 024
- DE-A- 4 001 612
- DE-U- 8 708 867

## Beschreibung

Die Erfindung betrifft eine einschichtige, transparente, biaxial orientierte, thermofixierte schlauchförmige Nahrungsmittelhülle, insbesondere künstliche Wursthülle, auf Basis von Polyamid.

Nahrungsmittelhüllen auf Basis von Polyamid sind in der Literatur mehrfach beschrieben (z. B. Saechtling, Kunststoff-Taschenbuch bzw. Kunststoff-Handbuch, Band IV, "Polyamide", oder Karmas, Sausage Casing Technology). In vielen Fällen werden Polymermischungen eingesetzt, um gewisse nachteilige Eigenschaften des reinen Polyamids auszugleichen (EP-A-0 176 980). So können reine Polyamidhüllen zwar glasklar sein, d. h. sie weisen eine hohe Transparenz auf, ihre Wasserdampfbarriere ist jedoch wesentlich niedriger als bei vergleichbaren Hüllen aus Polyamidblends.

Für bestimmte Arten von Würsten, insbesondere Brüh- und Kochwürste, ist es wünschenswert, die hohe Transparenz, Aromadichtheit und Wärme- und Kältebeständigkeit der Polyamidhülle zu erhalten und gleichzeitig die Wasserdampfbarriere und die Sauerstoffdichtigkeit zu verbessern. Hierzu werden verschiedene Zusätze oder Änderungen der Zusammensetzung der eingesetzten Polymermischungen bzw. eine Orientierung der Polyamidhüllen beschrieben, wodurch jedoch die Transparenz der Hülle oder andere wichtige Eigenschaften beeinträchtigt werden.

So ist beispielsweise bekannt, daß Materialien aus Polyolefinen, insbesondere Polyethylen (PE) und Polypropylen (PP), eine hervorragende Wasserdampfdichte besitzen. Die Verarbeitung in einem Blend mit Polyamiden (PA) setzt jedoch gleichzeitig die Sauerstoffbarriere der resultierenden Hülle sehr stark herab.

Außerdem weisen Hüllen aus einem solchen PA/PE-Blend einen bläulichen, perlmuttartigen Glanz auf, der den Eindruck von verschimmelter, verdorbener Ware erweckt. Zusätzlich wird mit steigendem Polyolefinanteil die Bräthaftung zunehmend verschlechtert, und es kommt zu einem unerwünschten Geleeabsatz. Außerdem wird auch die Bedruckbarkeit mit zunehmendem polyolefinischem Anteil immer schlechter.

Aus dem Stand der Technik sind weitere Versuche bekannt, die Eigenschaften der Hüllen auf Polyamidbasis zu verbessern.

In der DE-A-39 43 024 wird eine einschichtige schlauchförmige, streckorientierte Verpackungshülle beschrieben, die im wesentlichen aus Polyamid 6 und einem teilaromatischen Copolyamid aus Hexamethylendiamin-, Terephthalsäure- und Isophthalsäureeinheiten besteht. Die Wursthülle ist glasklar und weist eine besonders hohe Rückstellelastizität auf, die ein faltenfreies Anliegen der Hülle an der Wurst gewährleisten soll. Diese Hülle zeigte jedoch in der praktischen Anwendung eine noch immer zu hohe Wasserdampfpermeation, die besonders bei kleinkalibrigen Hüllen (⌀ <45 mm) zu unerwünschten Gewichtsverlusten und Austrocknung der Wurst führt. Bei Umschlagszeiten der Würste von mehr als 2 Wochen kommt es zu einem frühzeitigen Austrocknen des Wurstgutes unter Farbveränderung, wodurch die Ware einen alten, verdorbenen Eindruck macht.

Die EP-A-0 065 278 beschreibt eine transparente schrumpffähige Folie aus mindestens einer Schicht aus einer Polymermischung von linearem aliphatischem Polyamid und/oder einer elastomeren Komponente und 15 bis 90 Gew.-% eines teilaromatischen Polyamids. Als elastomere Komponente werden Polybutadien und Gemische aus Polyamiden mit Polybutadien beschrieben. Die Folie weist gute Schrumpfeigenschaften, eine gute Transparenz und einen hohen Oberflächenglanz auf, wobei die guten physikalischen Eigenschaften des Polyamids erhalten bleiben. Die Barriereeigenschaften sind jedoch noch verbesserungswürdig.

Die EP-A-0 358 038 beschreibt ein Blend aus einem amorphen Nyloncopolymer und einem Nyloncopolyamid. Als amorphe Polyamidkomponente ist ein Copolyamid aus Hexamethylen-, Isophthalamid- und Terephthalamideinheiten beschrieben; die Copolyamidkomponente umfaßt Copolymere aus PA 6 und einem weiteren Polyamid, vorzugsweise PA 6/12 oder PA 6/66. Gegebenenfalls kann das Blend als weitere Komponente ein Polyamidhomopolymer wie PA 6, PA 11, PA 12 enthalten. Dieses Blend ist nach der Beschreibung für die Herstellung von Verpackungshüllen und -folien für Nahrungsmittel zu verwenden. In einer weiteren Ausführungsform können weitere Schichten aus geeigneten polyolefinischen Materialien oder aus geeigneten Polyestern aufgebracht sein. Solche Polymerlegierungen zeigen häufig bei der Herstellung von biaxial orientierten Schläuchen einen unsteten Streckverlauf. Ferner wird durch die beanspruchte Mehrschichthüllenausführung die Herstellung einer solchen Hülle teuer und kompliziert.

Die schlauchförmige Nahrungsmittelhülle gemäß der EP-A 0 325 151 ist aus einem Polymergemisch hergestellt, das aus einem linearen aliphatischen und einem teilaromatischen Polyamid, einem Polyester (Polyterephthalsäureester) sowie Farbstoff besteht. Der Farbstoff - bevorzugt sind Farbpigmente - läßt sich homogen in der Polymermischung verteilen. Auf diese Weise können besonders gleichmäßig gefärbte, z.B. tiefschwarze oder brillantrote, Hüllen erhalten werden.

Die EP-A-0 450 435 beschreibt schrumpffähige Schlauchfolien auf Basis eines Polyamid/Polyolefin*-*Polymergemisches, welches aliphatische Polyamide und ein säuremodifiziertes Olefincopolymer, insbesondere ein Ethylen/Acrylsäure- oder ein Ethylen/Methacrylsäure-Copolymer, enthält. Diese Schlauchfolie soll eine verbesserte Barrierewirkung gegenüber Wasserdampf und Sauerstoff und ein verbessertes Schälverhalten aufweisen. Durch den EAA-Eintrag allein wird die spezifische O₂-Barriere im Vergleich zur reinen PA 6-Hülle reduziert. Mit Steigerung des Acrylsäureanteils im Copolymer kann die O₂-Permeationsrate zwar reduziert werden, jedoch führt dies gleichzeitig zur Reduzierung der Wasserdampfdichte.

Die Aufgabe der vorliegenden Erfindung bestand darin, die Nachteile der im Stand der Technik beschriebenen Hüllen auf Polyamidbasis zu vermeiden. Insbesondere sollte eine schrumpfarme Nahrungsmittelhülle zur Verfügung gestellt werden, die eine verbesserte Barriere gegenüber UV-Licht aufweist, ohne die ausgezeichnete Transparenz, wie sie bei reinen Polyamidhüllen möglich ist, zu beeinträchtigen. Dabei sollen gleichzeitig die Barriereeigenschaften gegenüber Wasserdampf und Sauerstoff verbessert werden. Diese kombinierten Eigenschaffen sollen zu einer längeren Lagerfähigkeit des Wurstprodukts beitragen, um auch bei Umschlagszeiten von mehreren Wochen die Qualität der Ware zu erhalten.

Darüber hinaus sollen andere wichtige Vorteile der Hüllen auf Polyamidbasis nicht beeinträchtigt werden, beispielsweise darf das Hüllenmaterial nicht verblocken, was sich beim Konfektionieren, Raffen und beim Füllprozeß außerordentlich störend auswirkt. Zusätzlich ist eine gute Bedruckbarkeit des Hüllenmaterials gefordert, und die Hülle soll für spezielle Anwendungszwecke gut zu färben sein. Durch einen geringen Schrumpf, auch bei erhöhter Temperatur, soll eine gute Kaliberkonstanz und ein faltenfreies Anliegen der Hülle an das Wurstgut gewährleistet sein. Zusätzlich soll durch die Orientierung die Materialfestigkeit der Hülle derart gesteigert werden, daß trotz flexibler Folie ein pralles Ausfüllen bei der Fertigung der Wurst ohne eine Deformation des Schlauches möglich ist und ferner im Zusammenwirken mit einer - ohne zusätzliche Arbeitsschritte (z. B. Plasmabehandlung etc.) - erhaltenen Brätaffinität der inneren Hüllenoberfläche ein faltenfreies Anliegen der Hülle am Wurstgut und damit die Vermeidung des Aussaftens vom Wurstbrät im Brüh- und Kühlprozeß gegeben ist. Alle Veränderungen im Hinblick auf eine Verbesserung der beschriebenen Eigenschaften dürfen die verfahrenstechnische Handhabbarkeit des Materials nicht beeinträchtigen, insbesondere muß eine gute Streckkonstanz gewährleistet bleiben. Bisher sind keine Wursthüllen auf Polyamidbasis bekannt, die den hohen Anforderungen bei der Wurstherstellung umfassend genügen und im Hinblick auf das komplexe Anforderungsprofil alle Eigenschaften in gewünschtem Maße aufweisen.

Diese Aufgabe wird überraschenderweise gelöst durch eine einschichtige, transparente, biaxial orientierte, thermofixierte schlauchförmige Nahrungsmittelhülle, insbesondere künstliche Wursthülle, aus einer Mischung, die a) ein lineares, aliphatisches Polyamid und b) ein teilaromatisches Copolyamid umfaßt, dadurch gekennzeichnet, daß die Mischung zusätzlich c) ein säuremodifiziertes Polyolefin und d) ein Pigment mit einer Partikelgröße von 0,01 bis 15 µm enthält.

Lineare aliphatische Polyamide im Sinne der vorliegenden Erfindung umfassen ganz allgemein lineare Homo- und Copolyamide, die aus aliphatischen Bestandteilen mit 5 bis 20 C-Atomen aufgebaut sind, beispielsweise Polyamid 6, Polyamid 66, Polyamid 610, Polyamid 11, Polyamid 12 usw. Unter den Begriff lineare aliphatische Polyamide fallen auch solche Copolyamide, welche in geringen Mengen, d. h. im allgemeinen nicht mehr als 10 Mol-%, vorzugsweise unter 5 Mol-%, bezogen auf das lineare aliphatische Polyamid, Cycloaliphaten und/oder Aromaten enthalten, die aber nicht den unten näher definierten sogenannten teilaromatischen Copolyamiden gleichgesetzt werden dürfen.

Als lineare Polyamide sind solche aus ausschließlich aliphatischen Bestandteilen besonders bevorzugt. Als ganz besonders vorteilhaft haben sich PA 6, PA 11 und PA 12 erwiesen.

Der Anteil an linearem Polyamid in der Gesamtmischung kann innerhalb weiter Grenzen variieren und liegt in einem Bereich von 44,5 bis 89,5 Gew.-%, bevorzugt in einem Bereich von 60 bis 80 Gew.-%, bezogen auf die Gesamtmischung.

Teilaromatische Copolyamide umfassen solche Polyamide, die entweder aus aromatischen Diaminkomponenten und aliphatischen Dicarbonsäurekomponenten oder umgekehrt aus aliphatischen Diamin- und aromatischen Dicarbonsäurekomponenten aufgebaut sind. Der Anteil der jeweiligen aromatischen Komponente liegt zwischen 30 und 80 Mol-%, vorzugsweise zwischen 40 und 60 Mol-%, der Anteil der entsprechenden aliphatischen Komponente zwischen 80 und 30 Mol-%, vorzugsweise zwischen 60 und 40 Mol-%, bezogen auf das teilaromatische Copolyamid. In einer bevorzugten Ausführungsform werden Polykondensate aus linearen aliphatischen Alkylen-Diaminen mit 5 bis 15 C-Atomen und aromatischen Dicarbonsäuren eingesetzt, wobei die linearen aliphatischen Diamine solche wie Hexamethylendiamin, 1,7-Diaminoheptan, 1,8-Diaminooctan, 1,10-Diaminodecan, 1,12-Diaminododecan oder 2,2,4-Trimethylhexamethylendiamin umfassen und die aromatischen Dicarbonsäuren solche wie Isophthalsäure und/oder Terephthalsäure. Als ganz besonders geeignet hat sich ein teilaromatisches Copolyamid aus Hexamethylendiamin, Terephthalsäure und Isophthalsäure erwiesen, insbesondere das sogenannte Polyhexamethylenterephthalhexamethylenisophthalamid (PA 6I/6T). Der Anteil an teilaromatischem Copolyamid in der Gesamtmischung kann ebenfalls in weiten Grenzen variieren und liegt zwischen 1 und 50 Gew.-%, bezogen auf das Gewicht der Gesamtmischung, wobei der Bereich von 5 bis 35 Gew.-% besonders bevorzugt ist, insbesondere 10 bis 20 Gew.-%.

Die säuremodifizierten Olefin-Copolymeren umfassen Copolymere aus einem oder mehreren α-Olefin/en mit 4 bis 10 C-Atomen, vorzugsweise Ethylen und/oder Propylen und/oder Butylen und einer α,β-ethylenisch ungesättigten Carbonsäure, insbesondere Acrylsäure und/oder Methacrylsäure. Insbesondere sind Ethylen/Acrylsäure-Polymere, Ethylen/Methacrylsäure-Copolymere sowie Ethylen/Propylen/Acrylsäure- bzw. -methacrylsäure-Copolymere bevorzugt.

Der Anteil der Carbonsäurekomponente liegt in einem Bereich von 1 bis 15 Mol-%, vorzugsweise 4 bis 9 Mol-%, insbesondere bevorzugt 5,5 bis 8,5 Mol-%, bezogen auf das jeweilige Copolymere.

Der Anteil des säuremodifizierten Olefin-Copolymeren in der Gesamtmischung liegt in einem Bereich von 5 bis 30 Gew.-%, wobei 10 bis 25 Gew.-% bevorzugt und 15 bis 20 Gew.-% ganz besonders bevorzugt sind, jeweils bezogen auf das Gesamtgewicht der Mischung.

Unter Pigmenten im Sinne der vorliegenden Erfindung werden Teilchen einer mittleren Teilchengröße von 0,01 bis 15 µm verstanden. Bevorzugt sind anorganische Partikel, insbesondere Oxide des Titans, Siliciums oder Calciums oder Mischungen daraus, vorzugsweise solche wie TiO₂ und/oder SiO₂ oder Pigmente mit einer Blättchenstruktur wie beispielsweise Glimmer (Mica). Bevorzugt liegt die Partikelgröße der Pigmente in einem Bereich von 0,01 bis 15 µm, insbesondere von 0,02 bis 10 µm. Besonders bevorzugt ist TiO₂ mit einer mittleren Teilchengröße von 0,05 bis 5 µm.
Die Konzentration an Pigment in der Mischung liegt in einem Bereich von 0,25 bis 5 Gew.-%, insbesondere 0,4 bis 3 Gew.-%, vorzugsweise 1 bis 1,5 Gew.-%, bezogen auf die Gesamtmischung.

Um bestimmte Eigenschaften der erfindungsgemäßen Nahrungsmittelhülle auf Polyamidbasis noch zu verbessern, können übliche Zusätze, die die gewünschten Eigenschaften nicht beeinträchtigen, in einer jeweils wirksamen Menge enthalten sein, insbesondere Streckhilfsmittel wie Silikonöle.

Die Herstellung der Hülle erfolgt durch schlauchförmige Extrusion zum Primärschlauch und anschließende Orientierung durch Streckung in Längs- und Querrichtung. Abschließend wird unter Vermeidung eines Längs- und Querschrumpfs thermofixiert, wodurch die Folie bei erneutem Erhitzen nur noch wenig schrumpft. Diese so erhaltene Schlauchfolie ist unter 80 °C kaum mehr schrumpffähig, jedoch glasklar und kann anschließend zur Wursthülle konfektioniert, mit Brühwurst- oder Kochwurstbrät gefüllt, gebrüht und ausgekühlt werden.

Die erfindungsgemäße Hülle zeichnet sich insbesondere durch eine hervorragende Wasserdampfbarriere in Kombination mit einer ausgezeichneten Sauerstoffdichte und einer hervorragenden UV-Undurchlässigkeit bis hinein in den sichtbaren Bereich aus. So ließ sich die Wasserdampfbarriere auf Werte bis zu fast 8 g/m²·d senken, wobei gleichzeitig eine Sauerstoffdichte von 10 cm³/m²·d bar erreicht wurde. Gleichzeitig konnte die UV-Barriere verbessert werden, wobei überraschenderweise die ausgezeichnete Transparenz nach wie vor gewährleistet ist. Das optische Erscheinungsbild wird trotz verbesserter UV-Barriere nicht beeinträchtigt. Hierdurch wird ein Hüllenmaterial zur Verfügung gestellt, mit dem Wurstprodukte hergestellt werden können, die eine deutlich längere Haltbarkeit und Lagerfähigkeit besitzen. In der Praxis zeigte sich, daß nun Umschlagszeiten der Würste von 2 Wochen auf bis zu 6 Wochen ausgedehnt werden konnten. Darüber hinaus ist das Hüllenmaterial gut zu bedrucken und färbbar (Farbpigmente). Zusätzlich ist hervorzuheben, daß diese Hüllen eine deutlich verringerte Neigung zum Verblocken aufweisen.

Zusammenfassend ist festzustellen, daß sich die erfindungsgemäße Nahrungsmittelhülle durch eine überraschende Kombination vorteilhafter Eigenschaften auszeichnet, insbesondere durch
- eine sehr gute UV-Undurchlässigkeit,
- eine hervorragende Transparenz,
- eine gute Bedruckbarkeit,
- eine hohe Wasserdampfbarriere,
- eine ausgezeichnete Sauerstoffdichte,
- eine geringe Neigung zum Verblocken,
- eine gute Färbbarkeit,
- einen geringen Schrumpf,
- ein faltenfreies Anliegen am Wurstgut,
- gute verfahrenstechnische Handhabbarkeit.

Durch diese überraschende Kombination ausgezeichneter Eigenschaften wird eine Hülle zur Verfügung gestellt, die sich insbesondere als Wursthülle für Brüh-und Kochwürste eignet und eine deutlich verbesserte Haltbarkeit und Lagerzeit der Würste gewährleistet.

Die Hülle wird in dem für Brühwurst und Kochwurst, z. B. Blutwurst, üblichen Kaliber, der gewöhnlich im Bereich von 30 bis 150 mm, insbesondere 40 bis 120 mm, liegt, hergestellt. Ihre Dicke ist im Vergleich zu üblichen Wursthüllen aus Polyamid relativ gering und ist im allgemeinen kleiner als 50 Mikrometer, vorzugsweise liegt sie im Bereich von 25 bis 40 Mikrometer. Trotz der geringen Wanddicke läßt sich in die Schlauchhülle problemlos Wurstbrät unter Druck einpressen.

Die Erfindung wird anhand der nachfolgenden Beispiele näher erläutert:

### Beispiel 1

Eine Dryblendmischung aus 79,6 % Gew.-% Polyamid 6, 10 % Gew.-% Copolyamid PA 6I/6T, 10 Gew.-% Ethylenmethacrylsäure-Copolymerisat und 0,4 % Mica wurde in einem Extruder plastifiziert, homogenisiert und über eine Ringdüse zu einem Vorschlauch von 19 mm Durchmesser und 300 µm Wandstärke durch Kühlung abgeschreckt.

Der Schlauch wurde anschließend erwärmt und innerhalb der Streckzone gemäß der in DE-A-37 29 449 beschriebenen Verfahrensweise biaxial verstreckt. Dabei wurden folgende Streckverhältnisse eingehalten:
- Querstreckverhältnis: 1 : 3,4
- Längsstreckverhältnis: 1 : 2,7

Auf diese Weise wurde eine Schlauchfolie von 61 mm Durchmesser mit einer Wandstärke von ∼ 35 µm erhalten.

Die Hülle wurde in einem weiteren Verfahrensschritt mit Hilfe einer weiteren Base unter Vermeidung eines Längs- und Querschrumpfs thermofixiert und anschliessend zur Wursthülle konfektioniert, mit Kochwurstbrät gefüllt, gebrüht und ausgekühlt.

Zum Vergleich wurde in analoger Arbeitsweise und gleicher Abmessung die Herstellung folgender Hüllen angestrebt:

| | | |
|---|---|---|
| **Vergleichsbeispiel 1:** | Hülle aus | 100 Gew.-% Polyamid 6 |
| **Vergleichsbeispiel 2:** | Hülle aus | 90 Gew.-% Polyamid 6 |
| | | 10 Gew.-% PA 6I/6T |
| **Vergleichsbeispiel 3:** | Hülle aus | 90 Gew.-% Polyamid 6 |
| | | 10 Gew.-% Ethylen/Methacrylsäure-Copolymer |

Während die Hüllen der Vergleichsbeispiele 1 und 2 problemlos realisiert werden konnten, war die nach Vergleichsbeispiel 3 angestrebte Hülle nicht zu realisieren.

Der in diesem Vergleichstest gefertigte Primärschlauch erwies sich als unverstreckbar.

Die Basiseigenschaften dieser Hüllen sind in der Tabelle gelistet.

Im Vergleich der mechanischen Eigenschaften ist die Festigkeit des beanspruchten Schlauchs gegenüber der reinen orientierten PA*-*Hülle nur geringfügig reduziert und liegt sogar geringfügig über der nach DE-A-39 43 024 aufgebauten Wursthülle.

Ferner zeichnet sich die aus einem Mehrphasensystem gebildete Polymerhülle durch eine verbesserte Bruchdehnung bei gleichzeitig nur geringfügiger Verringerung des σ₅-Wertes aus.

Besonders hervorzuheben ist jedoch die signifikante Verbesserung der Barriereeigenschaften, insbesondere die Anhebung der Wasserdampfdichte.

Die außerdem im Diagramm wiedergegebene Transmissionsmessung der im Beispiel bzw. Vergleichsbeispiel gefertigten Hüllen belegt die herausragende Eigenschaft einer guten UV-Barriere und gleichzeitig verbesserte Lichtdurchlässigkeit im sichtbaren Bereich der erfindungsgemäßen Nahrungsmittelhülle.

Die spektrale Transmissionsmessung wurde ermittelt mit dem Spektralphotometer PMQ II der Firma Zeiss (Lichtquelle: Wasserstofflampe Typ H 30).

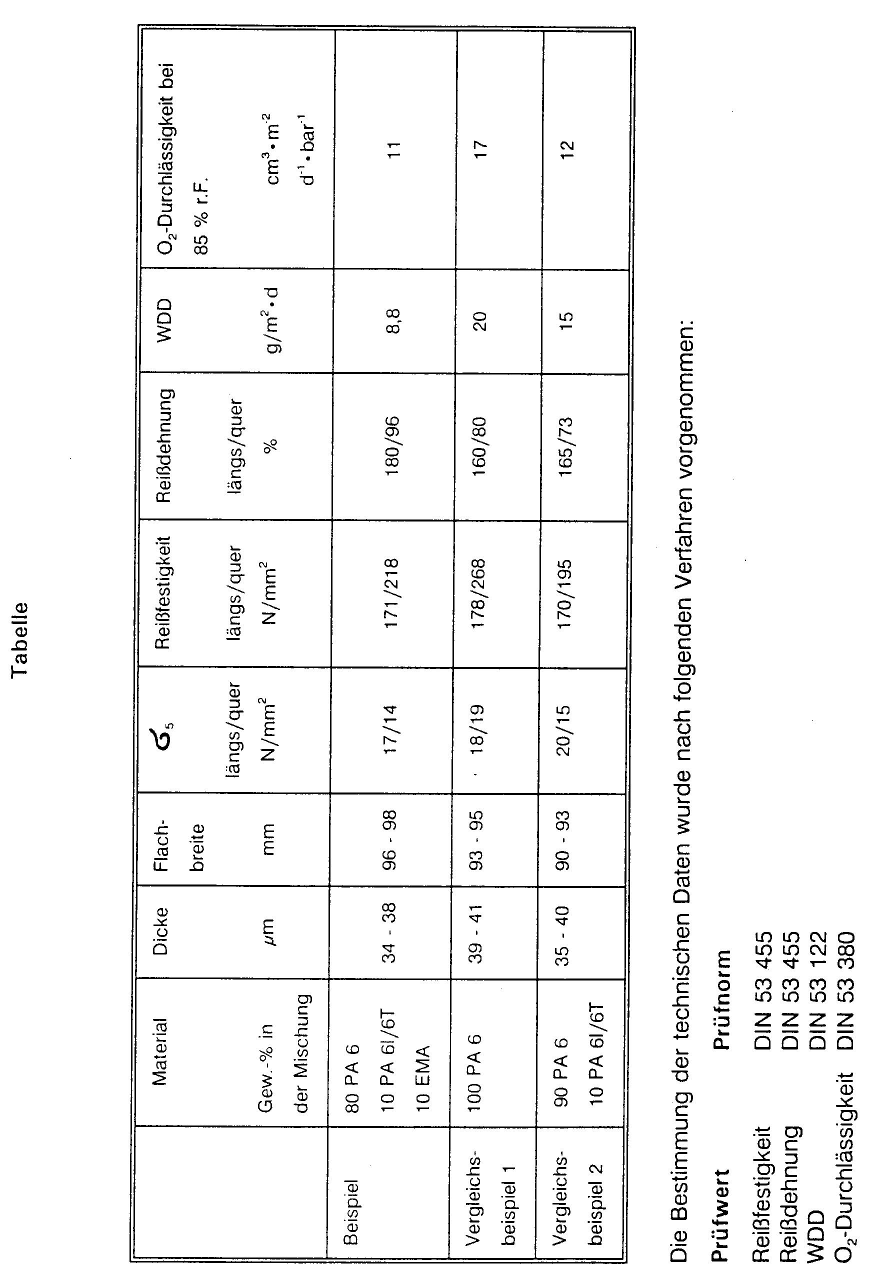

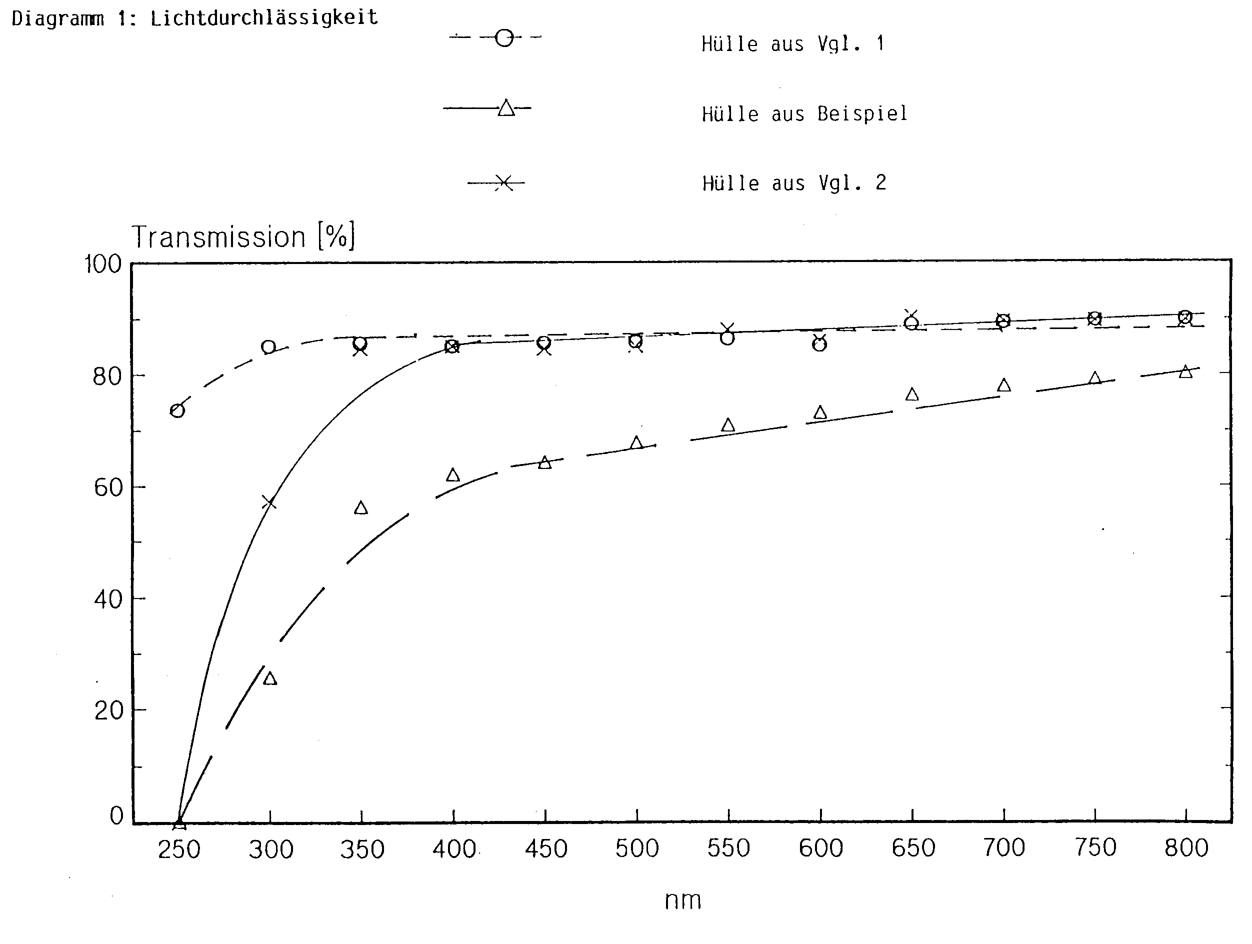

## Patentansprüche

1. Einschichtige, transparente, biaxial orientierte, thermofixierte schlauchförmige Nahrungsmittelhülle, insbesondere künstliche Wursthülle, aus einer Mischung, die a) ein lineares, aliphatisches Polyamid und b) ein teilaromatisches Copolyamid umfaßt, dadurch gekennzeichnet, daß die Mischung zusätzlich c) ein säuremodifiziertes Polyolefin und d) ein Pigment mit einer Partikelgröße von 0,01 bis 15 µm enthält.

2. Schlauchförmige Nahrungsmittelhülle nach Anspruch 1, dadurch gekennzeichnet, daß der Anteil
von a) 44,5 bis 89,5 Gew.-%,
von b) 5 bis 50 Gew.-%,
von c) 5 bis 30 Gew.-%,
von d) 0,5 bis 3 Gew.-%
beträgt.

3. Schlauchförmige Nahrungsmittelhülle nach einem der Ansprüche 1 und/oder 2, dadurch gekennzeichnet, daß das lineare aliphatische Polyamid ein aliphatisches Homo- oder Copolyamid ist, welches aus aliphatischen Polyamiden mit 5 bis 20 C-Atomen aufgebaut ist.

4. Schlauchförmige Nahrungsmittelhülle nach einem oder mehreren der Ansprüche 1 bis 3, dadurch gekennzeichnet, daß das lineare aliphatische Polyamid Polyamid 6 oder Polyamid 11 oder Polyamid 12 ist.

5. Schlauchförmige Nahrungsmittelhülle nach einem oder mehreren der Ansprüche 1 bis 4, dadurch gekennzeichnet, daß das teilaromatische Copolyamid aus aromatischen Diaminkomponenten und aliphatischen Dicarbonsäurekomponenten oder aus aromatischen Dicarbonsäurekomponenten und aliphatischen Diaminkomponenten aufgebaut ist.

6. Schlauchförmige Nahrungsmittelhülle nach einem oder mehreren der Ansprüche 1 bis 5, dadurch gekennzeichnet, daß das teilaromatische Copolyamid aus Hexamethylendiamin, Terephthalsäure und Isophthalsäure aufgebaut ist.

7. Schlauchförmige Nahrungsmittelhülle nach einem oder mehreren der Ansprüche 1 bis 6, dadurch gekennzeichnet, daß das säuremodifizierte Polyolefin ein Copolymeres aus Ethylen- und/oder Propyleneinheiten und einer α,β-ungesättigten Carbonsäure ist.

8. Schlauchförmige Nahrungsmittelhülle nach einem oder mehreren der Ansprüche 1 bis 7, dadurch gekennzeichnet, daß das säuremodifizierte Polyolefin ein Ethylen/Acrylsäure-Copolymer oder Ethylen/Methacrylsäure-Copolymer ist.

9. Schlauchförmige Nahrungsmittelhülle nach einem oder mehreren der Ansprüche 1 bis 8, dadurch gekennzeichnet, daß das Pigment eine Partikelgröße von 0,02 bis 10 µm aufweist.

10. Schlauchförmige Nahrungsmittelhülle nach einem oder mehreren der Ansprüche 1 bis 9, dadurch gekennzeichnet, daß das Pigment TiO₂ und/oder SiO₂ und/oder Glimmer ist.

## Claims

1. A single-layered, transparent, biaxially oriented, thermoset tubular food casing, in particular a synthetic sausage casing, made of a mixture which comprises a) a linear, aliphatic polyamide and b) a part-aromatic copolyamide, wherein the mixture additionally comprises c) an acid-modified polyolefin and d) a pigment having a particle size of from 0.01 to 15 µm.

2. The tubular food casing as claimed in claim 1, wherein the proportion
of a) is 44.5 to 89.5 % by weight,
of b) is 5 to 50 % by weight,
of c) is 5 to 30 % by weight,
of d) is 0.5 to 3 % by weight.

3. The tubular food casing as claimed in either of claims 1 or 2, wherein the linear aliphatic polyamide is an aliphatic homopolyamide or copolyamide built up from aliphatic polyamides having 5 to 20 carbon atoms.

4. The tubular food casing as claimed in one or more of claims 1 to 3, wherein the linear aliphatic polyamide is nylon 6 or nylon 11 or nylon 12.

5. The tubular food casing as claimed in one or more of claims 1 to 4, wherein the part-aromatic copolyamide is built up from aromatic diamine components and aliphatic dicarboxylic acid components or from aromatic dicarboxylic acid components and aliphatic diamine components.

6. The tubular food casing as claimed in one or more of claims 1 to 5, wherein the part-aromatic copolyamide is built up from hexamethylenediamine, terephthalic acid and isophthalic acid.

7. The tubular food casing as claimed in one or more of claims 1 to 6, wherein the acid-modified polyolefin is a copolymer of ethylene and/or propylene units and an α,β-unsaturated carboxylic acid.

8. The tubular food casing as claimed in one or more of claims 1 to 7, wherein the acid-modified polyolefin is an ethylene/acrylic acid copolymer or ethylene/methacrylic acid copolymer.

9. The tubular food casing as claimed in one or more of claims 1 to 8, wherein the pigment has a particle size of from 0.02 to 10 µm.

10. The tubular food casing as claimed in one or more of claims 1 to 9, wherein the pigment is TiO₂ and/or SiO₂ and/or mica.

## Revendications

1. Enveloppe en forme de boyau, monocouche, transparente, orientée biaxialement, thermofixée, pour produit alimentaire, en particulier enveloppe artificielle pour saucisse, à base d'un mélange comprenant a) un polyamide aliphatique linéaire et b) un copolyamide partiellement aromatique, caractérisée en ce que le mélange contient en outre c) une polyoléfine modifiée par un acide et d) un pigment ayant une taille de particules de 0,01 à 15 µm.

2. Enveloppe en forme de boyau pour produit alimentaire selon la revendication 1, caractérisée en ce que la proportion
de a) va de 44,5 à 89,5 % en poids,
de b) va de 5 à 50 % en poids,
de c) va de 5 à 30 % en poids,
de d) va de 0,5 à 3 % en poids.

3. Enveloppe en forme de boyau pour produit alimentaire selon la revendication 1 ou 2, caractérisée en ce que le polyamide aliphatique linéaire est un homo- ou copolyamide aliphatique qui est constitué de polyamides aliphatiques ayant de 5 à 20 atomes de carbone.

4. Enveloppe en forme de boyau peur produit alimentaire selon une ou plusieurs des revendications 1 à 3, caractérisée en ce que le polyamide aliphatique linéaire est le polyamide-6 ou le polyamide-11 ou le polyamide-12.

5. Enveloppe en forme de boyau pour produit alimentaire selon une ou plusieurs des revendications 1 à 4, caractérisée en ce que le copolyamide partiellement aromatique est constitué de composants diamine aromatique et de composants acide dicarboxylique aliphatique ou de composants acide dicarboxylique aromatique et de composants diamine aliphatique.

6. Enveloppe en forme de boyau pour produit alimentaire selon une ou plusieurs des revendications 1 à 5, caractérisée en ce que le copolyamide partiellement aromatique est constitué d'hexaméthylènediamine, d'acide téréphtalique et d'acide isophtalique.

7. Enveloppe en forme de boyau pour produit alimentaire selon une ou plusieurs des revendications 1 à 6, caractérisée en ce que la polyoléfine modifiée par un acide est un copolymère constitué de motifs éthylène et/ou propylène et d'un acide carboxylique α,β-insaturé.

8. Enveloppe en forme de boyau pour produit alimentaire selon une ou plusieurs des revendications 1 à 7, caractérisée en ce que la polyoléfine modifiée par un acide est un copolymère éthylène/acide acrylique ou un copolymère éthylène/acide méthacrylique.

9. Enveloppe en forme de boyau pour produit alimentaire selon une ou plusieurs des revendications 1 à 8, caractérisée en ce que le pigment présente une taille de particules de 0,02 à 10 µm.

10. Enveloppe en forme de boyau pour produit alimentaire selon une ou plusieurs des revendications 1 à 9, caractérisée en ce que le pigment est TiO₂ et/ou SiO₂ et/ou le mica.
